# EUROPÄISCHE PATENTANMELDUNG

(11) **EP 0 905 494 A2**
(43) Veröffentlichungstag der Anmeldung: **31.03.1999**
(21) Anmeldenummer: 98118130.8
(22) Anmeldetag: 24.09.1998
(51) Int. Cl.: G01K 7/18

(54) **Hochtemperatursensor**

(30) Priorität: 26.09.1997 DE 19742694
(71) Anmelder: SIEMENS MATSUSHITA COMPONENTS GmbH & CO. KG, 81541 München (DE)
(72) Erfinder: Kreitschitz, Oswald Dr., 8530 Deutschlandsberg (AT); Fleischer, Maximilian Dr., 85635 Höhenkirchen (DE); Meixner, Hans Prof., 85540 Haar (DE)
(74) Vertreter: Epping, Wilhelm, Dr.-Ing.

(57) **Zusammenfassung**

Hochtemperaturgassensor oder Temperaturfühler mit einer planaren Leiterbahn (2) auf einem Substrat (1), bei dem die Leiterbahn mit einer Passivierungsschicht (3) bedeckt ist, die denselben thermischen Ausdehnungskoeffizienten hat, wie das Material des Substrates. Bei einem keramischen Substrat aus Al₂O₃ besteht die Passivierungsschicht vorzugsweise ebenfalls aus Al₂O₃.

## Beschreibung

Die vorliegende Erfindung betrifft einen Sensor mit planaren Leiterbahnen, der insbesondere als Hochtemperaturgassensor oder Temperaturfühler verwendet werden kann.

Sensoren mit einer planaren Leiterbahnstruktur auf einer Substratoberseite werden z. B. als Gassensoren verwendet. Wenn die Leiterbahnen eine Struktur von fingerförmig miteinander verzahnten Interdigitalelektroden bilden, kann damit die elektrische Leitfähigkeit einer sich darauf befindenden halbleitenden Sensorschicht gemessen werden und damit die chemische Zusammensetzung eines den Sensor überströmenden Gases festgestellt werden. Hochtemperaturgassensoren in Planartechnologie werden mittels stromdurchflossener Heizstrukturen auf die benötigten Betriebstemperaturen beheizt. Dazu werden üblicherweise Leiterbahnen verwendet, die in Dünn- oder Dickschichttechnik auf eine Oberseite des Substrates aufgebracht sind. Die als Heizung vorgesehenen Leiterbahnen können z. B. auf der Rückseite des Substrates aufgebracht sein. Statt dessen können auch die als Sensorelektroden fungierenden Leiterbahnen selbst als Heizungen verwendet werden. Falls die Leiterbahnen aus einem Metall sind, das einen ausreichend hohen Temperaturkoeffizienten der elektrischen Leitfähigkeit besitzt, kann der Widerstand der Leiterbahn auch zur Bestimmung der Sensortemperatur verwendet werden. Unabhängig davon können derartige Strukturen prinzipiell auch als kostengünstige Temperaturfühler eingesetzt werden.

Bei Temperaturen oberhalb von 600°C sind selbst Leiterbahnen aus hochschmelzenden Edelmetallen wie Gold oder Platin nicht mehr stabil. Im allgemeinen kommt es durch Diffusionsprozesse oder durch Gasphasentransport (z. B. durch Bildung flüchtiger Platinoxide bei Platinleiterbahnen, die dem Luftsauerstoff ausgesetzt werden) zu einem Materialverlust der Leiterbahn.

Dadurch ergibt sich eine Verengung des Querschnittes der Leiterbahnen, die eine Änderung des elektrischen Widerstands der Leiterbahnstruktur bewirkt. Wird der elektrische Widerstand zur Bestimmung der Temperatur benutzt, so ist die gemessene Temperatur systematisch zu hoch. Wird die Heizung mit konstanter elektrischer Spannung betrieben, tritt außerdem eine Verringerung der Heizleistung auf. Bei Fortschreiten der Alterung der Leiterbahnen durch Materialverlust kommt es schließlich zu einer Unterbrechung der Leiterbahn, so daß die Heizung ganz ausfällt.

Durch Passivierungen, die die Leiterbahnstruktur gasdicht bedecken, wird versucht, den Materialverlust zu unterbinden. Bei kommerziellen Anbietern von Dünnschicht-Temperaturfühlern werden die Leiterbahnen mit hochschmelzenden Gläsern abgedeckt. Bei derartigen Sensoren liegt die obere Grenze der Betriebstemperatur allerdings bei etwa 600 bis 700°C. Diese Temperaturbegrenzung rührt daher, daß selbst hochschmelzende Gläser in diesem Temperaturbereich weich werden, zu kristallisieren beginnen und damit ihre Gasdichtigkeit verlieren. Siliziumdioxid ist oft wesentlicher Bestandteil eines Glases. Zur Erniedrigung der Schmelztemperatur ist dem Glas ein Flußmittel beigefügt.

Stabile Leiterbahnen für höhere Temperaturen können dadurch hergestellt werden, daß die Leiterbahn in Keramik eingesintert wird. Diese Lösung ist jedoch für Hochtemperaturgassensoren auf Ga₂O₃-Basis nicht geeignet, da die Größe des Sensors zur Minimierung der erforderlichen Heizleistung möglichst gering sein muß. Auch für Hochtemperatur-Meßfühler bietet sich diese Lösung nicht an, da auch hier die thermische Masse des Fühlers möglichst gering sein muß.

Bei Langzeitbetrieb dieser Sensoren bei Temperaturen um 950°C kommt es zu Schädigungen der Leiterbahnstruktur trotz intakter Passivierungsschicht. Diese Schädigungen sind strombedingt, resultieren also nicht allein aus den hohen Temperaturen, und sind auf den Mechanismus der Elektromigration zurückzuführen. Wegen der hohen Stromdichte in den als Heizung verwendeten Leiterbahnen von typisch 10⁵ A/cm² und infolge einer Erweichung des Leiterbahnmetalls bei den hohen vorherrschenden Temperaturen kommt es zu einem strombedingten Materialtransport von Atomen des Leiterbahnmetalls entlang von Korngrenzen in Stromrichtung. Dieser Materialtransport bewirkt mechanische Spannungen im Leiterbahnmaterial und führt im ungünstigen Fall zu lokaler Rißbildung. Das führt wiederum zu einer Änderung der Strompfade und erneuter Rißbildung, so daß bei Überschreiten einer gewissen kritischen Schwelle die Temperatur und die Stromdichte bis zu einem Ausfall der Sensorheizung führen können.

Aufgabe der vorliegenden Erfindung ist es, einen Hochtemperatursensor, insbesondere als Gassensor oder Temperaturfühler, anzugeben, der auch bei Betriebstemperaturen um 1000°C eine hohe Lebensdauer aufweist.

Diese Aufgabe wird mit dem Sensor mit den Merkmalen des Anspruchs 1 gelöst. Ausgestaltungen ergeben sich aus den abhängigen Ansprüchen.

Bei dem erfindungsgemaßen Sensor ist die Leiterbahn mit einer gasdichten Passivierungsschicht bedeckt, die aus einem Material besteht, das keine mechanischen Spannungen oder höchstens für die Funktion des Sensors unschädlich geringe mechanische Spannungen in der Leiterbahn erzeugt. Vorzugsweise besitzt das Material der Passivierungsschicht denselben thermischen Ausdehnungskoeffizienten wie das Substrat. Bei einer bevorzugten Ausführungsform besteht die Passivierungsschicht aus Al₂O₃, insbesondere bei Verwendung von keramischen Substraten aus Al₂O₃. Sie besitzt vorzugsweise eine Dicke zwischen 0,5 µm und 2 µm. Eine weitere Passivierung kann zwischen dem Substrat und der Leiterbahn vorhanden sein.

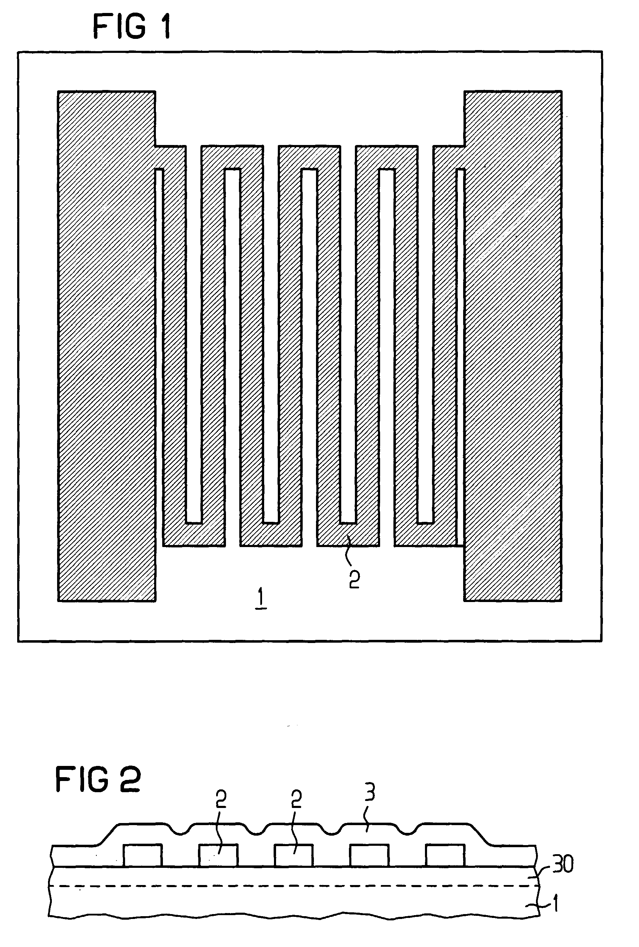

Es folgt eine genauere Beschreibung des erfindungsgemäßen Sensors anhand des Beispiels der Figuren 1 und 2.
- Figur 1: zeigt die Struktur einer als Heizung vorgesehenen Leiterbahn in Aufsicht.
- Figur 2: zeigt einen erfindungsgemäßen Sensor im Querschnitt.

In Figur 1 ist eine Leiterbahn 2 auf einem Substrat 1 in einer schematisierten Aufsicht dargestellt. Zwischen Anschlußflächen für den elektrischen Anschluß ist eine streifenförmige Leiterbahn in Form von Mäandern strukturiert, die als Heizelement dient. In Figur 2 ist dieser Sensor oder Teil eines Sensors im Querschnitt dargestellt. Auf dem Substrat 1 befinden sich die Anteile der Leiterbahn 2, die von der Passivierungsschicht 3 bedeckt und gasdicht nach außen verschlossen sind. Bei dem erfindungsgemäßen Sensor besitzt das Material der Passivierungsschicht 3 nach Möglichkeit den gleichen thermischen Ausdehnungskoeffizienten wie das Substratmaterial. Eine solche Passivierungsschicht vermeidet es, daß in der Leiterbahn mechanische Spannungen auftreten, die zu den eingangs beschriebenen Beschädigungen durch Stromtransport führen. Es wird am besten ein Material verwendet, das spannungsfrei abgeschieden werden kann. Ein geeignetes Material ist Al₂O₃. Bei der Verwendung von üblichen Substraten aus Al₂O₃ wird als Passivierungsschicht 3 vorzugsweise eine Al₂O₃-Schicht mit einer Dicke von 0,5 µm bis 2 µm gewählt. Eine solche Schicht, die auch bei Verwendung von Siliziumsubstraten geeignet ist, kann mittels CVD (chemical vapour deposition), Sputtern oder Molokularstrahlepitaxie aufgebracht werden. Bei Verwendung von Sputterverfahren werden gute Schichten erzielt, wenn z. B. von einem Target aus Aluminium mit hohem Sauerstoffanteil im Sputtergas (Ar:O₂ ca. 2:1) bei einem Gesamtdruck von ca. 10⁻⁴ mbar bei einer Heizung des Substrats auf ca. 600°C unter Verwendung einer Magnetron-Konfiguration mit Target-Substrat-Abstand von ca. 5 cm und bei einer Aufwachsrate von ca. 1 µm/h gearbeitet wird.

Es wurde erkannt, daß Al₂O₃ besondere Vorteile zur Passivierung einer als Heizerstruktur für einen Gassensor, der für den Hochtemperaturbereich vorgesehen ist, dienenden Leiterbahn aufweist. Durch Al₂O₃ wird im Gegensatz zu anderen Passivierungen, wie z. B. La₂O₃, Y₂O₃, CeO₄, TiO₂ oder Fe₃O₄, die Detektion chemisch reduzierender Gase nicht gestört. Eine bevorzugte Ausführungsform des erfindungsgemäßen Sensors umfaßt daher an sich bekannte gassensitive Elemente, z. B. eine Schicht aus einem halbleitenden Metalloxid, vorzugsweise Ga₂O₃, mit Meßelektroden, die den elektrischen Widerstand der einem Gas ausgesetzten Metalloxidschicht messen, und eine durch eine Leiterbahn gebildete Heizerstruktur zum Aufheizen des Sensors auf eine vorgesehene Temperatur, bei der eine ausreichende Sensitivität gegenüber den zu detektierenden Gasen erreicht ist, sowie eine Passivierung dieser Heizerstruktur mit einer Schicht aus Al₂O₃. Vorzugsweise ist der Gassensor so eingerichtet, daß mit der Heizerstruktur zugleich die Temperatur gemessen werden kann, damit die Temperatur auf einen konstanten Wert geregelt werden kann.

Die Leiterbahn wird vorzugsweise in einer Dicke zwischen 0,5 µm und 10 µm aus einem hochschmelzenden Metall mit einem Schmelzpunkt oberhalb 1000°C gebildet. Als Metall für die Leiterbahn kommt vorzugsweise Platin, eine Platinlegierung mit Iridium, Osmium oder Rhodium, Gold oder Wolfram in Frage.

## Patentansprüche

1. Sensor mit einer planaren Leiterbahn (2) aus Metall, die auf einem Substrat (1) aufgebracht und so strukturiert ist, daß sie durch Anlegen eines elektrischen Stromes als Heizung und/oder zur Bestimmung der Temperatur betrieben werden kann, bei dem die Leiterbahn mindestens auf der von dem Substrat abgewandten Seite von einer gasdichten Passivierungsschicht (3) bedeckt ist und
bei dem diese Passivierungsschicht (3) so ausgebildet ist, daß mechanische Spannungen in der Leiterbahn in einer für die Funktion des Sensors ausreichenden Weise vermieden werden.

2. Sensor nach Anspruch 1,
bei dem die Passivierungsschicht (3) denselben thermischen Ausdehnungskoeffizienten hat wie das Substrat (1).

3. Sensor nach Anspruch 1 oder 2,
bei dem die Passivierungsschicht Al₂O₃ ist.

4. Sensor nach Anspruch 3,
bei dem das Substrat Al₂O₃ ist.

5. Sensor nach einem der Ansprüche 1 bis 4,
bei dem die Leiterbahn eine Dicke zwischen 0,5 µm und 10 µm besitzt.

6. Sensor nach einem der Ansprüche 1 bis 5,
bei dem die Leiterbahn aus einem hochschmelzenden Metall mit einem Schmelzpunkt oberhalb 1000°C besteht.

7. Sensor nach Anspruch 6,
bei dem die Leiterbahn aus einem Metall aus der Gruppe von Platin, Platin-Iridium-Legierung, Platin-Osmium-Legierung, Platin-Rhodium-Legierung, Gold und Wolfram besteht.

8. Sensor nach einem der Ansprüche 1 bis 7,
bei dem die Passivierungsschicht eine Dicke zwischen 0,5 µm und 2 µm aufweist.

9. Sensor nach einem der Ansprüche 1 bis 8,
bei dem eine entsprechende Passivierung auch auf der dem Substrat zugewandten Seite der Leiterbahn vorhanden ist.

10. Sensor nach einem der Ansprüche 1 bis 9,
bei dem mindestens ein gassensitives Element vorhanden ist, das so ausgebildet ist, daß es mittels der Leiterbahn auf eine vorgegebene Temperatur aufgeheizt werden kann.
